(19) Europäisches Patentamt
European Patent Office
Office européen des brevets

(11) EP 2 248 626 A1

(12) **DEMANDE DE BREVET EUROPEEN**

(43) Date de publication:
**10.11.2010 Bulletin 2010/45**

(51) Int Cl.:
***B23Q 11/00*** *(2006.01)* ***B23Q 17/12*** *(2006.01)*

(21) Numéro de dépôt: **10161584.7**

(22) Date de dépôt: **30.04.2010**

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**
Etats d'extension désignés:
**AL BA ME RS**

(30) Priorité: **30.04.2009 FR 0902124**

(71) Demandeur: **Centre Technique de l'Industrie du Décolletage**
**74300 Cluses (FR)**

(72) Inventeurs:
• **Mulot, Serge**
**88500 Poussay (FR)**
• **Busi, Roger**
**74800 Saint Laurent (FR)**

(74) Mandataire: **Croonenbroek, Thomas Jakob et al**
**Cabinet Innovincia**
**11, Avenue des Tilleuls**
**74200 Thonon-les-Bains (FR)**

(54) **Procédé et dispositif de détermination d'au moins un point de fonctionnement d'une machine-outil**

(57) L'invention concerne un procédé et dispositif de détermination d'au moins un point de fonctionnement d'une machine-outil, machine-outil comprenant un tel dispositif par une analyse des vibrations d'une machine outil (1).

**FIG. 1**

**Description**

La présente invention concerne un procédé et un dispositif de détermination d'au moins un point de fonctionnement d'une machine-outil, une machine-outil comprenant un tel dispositif.

Plus spécifiquement, l'invention s'applique de façon générale à toute sorte de machine - outil pour l'usinage de tout matériau par enlèvement de matière : le tournage, le perçage, le fraisage, le décolletage, le fonçage, le chariotage. Elle peut s'appliquer à tout matériau comme du métal, par exemple des aciers ou des alliages, ou bien aussi aux matériaux plastiques et matériaux composites.

L'augmentation de la productivité, les contraintes de qualité de l'usinage liées par exemple, à l'état de surface des pièces usinées, ainsi que l'évolution des matériaux des pièces à usiner, nécessitent la constante évolution des procédés d'usinage.

Afin d'atteindre les nouveaux critères de performances requis, des méthodologies visant à déterminer et ou à optimiser les conditions de coupe ont été développées.

En effet, pour usiner une pièce métallique, il est nécessaire de respecter les vitesses de coupe et les vitesses d'avance en fonction de l'opération d'usinage envisagée, de l'outil, de la matière à usiner et de la lubrification éventuelle utilisée.

Le non respect de ces contraintes entraîne une qualité moindre, voir non acceptable des pièces usinées et une usure prématurée de l'outil.

Ceci entraîne également une chute de la rentabilité étant donné qu'il faut changer l'outil plus souvent.

Par ailleurs, même si l'on usine une pièce à une vitesse de coupe admissible, mais lente, cela entraîne aussi un temps de fabrication par pièce trop long.

A ce jour, le réglage de la vitesse de coupe se fait généralement de façon empirique, basé sur des expériences antérieures.

Pour guider les hommes de l'art dans le choix des conditions de coupe, on connaît le concept industriel de couple outil - matière (COM) défini par la norme NFE 66-520 pour la sélection des paramètres d'entrée de coupe tels que l'avance, la profondeur de passe, la largeur de passe ou la vitesse de coupe des outils dans la matière à usiner.

Cette norme préconise que les conditions d'usinage sont propres à un couple outil - matière usinée, et qu'une étude de l'évolution de paramètres de sortie de coupe, tels que la forme des copeaux, les efforts de coupe ou la puissance de la broche de la machine-outil, permet la détermination d'un domaine d'emploi optimal en termes de conditions de coupe telles que les plages d'avances et de vitesses de coupe des outils dans la matière à usiner.

Toutefois, les vitesses de coupe préconisées ne sont généralement pas optimisées.

Pour pallier au moins partiellement à ces inconvénients précités, l'invention propose un procédé et un dispositif de détermination d'au moins un point de fonctionnement d'une machine-outil qui vise à donner des vitesses de coupe optimisées en particulier par rapport à la méthode COM.

Ainsi, l'invention a pour objet un procédé de détermination d'au moins un point de fonctionnement d'une machine-outil pour une configuration donnée outil - matière à usiner dans la machine-outil, dans lequel :

- on mesure à l'intérieur d'une plage prédéfinie d'un paramètre dynamique de coupe des spectres de vibrations,

- on identifie sur les spectres de vibrations des bandes significatives de fréquences,

- on détermine des valeurs de puissance des bandes significatives de fréquences en fonction du paramètre dynamique de coupe,

- on détermine au moins un point de fonctionnement à partir des variations des valeurs de puissance en fonction du paramètre dynamique de coupe.

Ce procédé peut comporter une ou plusieurs des caractéristiques suivantes prises seules ou en combinaison :

- les valeurs de puissance des bandes significatives de fréquences correspondent à des amplitudes maximales des bandes significatives de fréquences ou à des valeurs d'aire des bandes significatives de fréquences,

- on obtient les spectres de vibrations à l'intérieur d'une plage prédéfinie du paramètre dynamique de coupe à intervalles réguliers.

- le paramètre dynamique de coupe est la vitesse de coupe ou la vitesse d'avance,

- on fixe la vitesse d'avance à une valeur prédéfinie et le paramètre dynamique de coupe est la vitesse de coupe,

- on fixe la vitesse de coupe à une valeur prédéfinie et le paramètre dynamique de coupe est la vitesse d'avance,

- la valeur prédéfinie de la vitesse de coupe est déterminée tel que définie ci-dessus, en particulier pour une opération de perçage,

- l'intervalle des vitesses de coupe est compris entre 15m/min et 25m/min, en particulier de 20m/min pour une opération d'usinage ou de fraisage,

- l'intervalle des vitesses de coupe est compris entre 5m/min et 15m/min, en particulier de 10m/min pour une opération de perçage,

- la plage prédéfinie du paramètre dynamique de coupe comprend une plage admissible du paramètre dynamique de coupe de la machine outil,

- on obtient les spectres de vibration avec au moins un accéléromètre par exemple placé sur la machine-outil, de préférence au niveau de l'outil de coupe,

- la plage de fréquences des spectres de vibrations s'étend jusqu'à au moins 25kHz,

- le temps d'acquisition de signaux de vibrations pour un spectre de vibrations est inférieur à 50ms, de préférence compris entre 15ms et 25 ms, en particulier 20ms,

- on obtient les spectres de vibrations en appliquant une transformée de Fourier à une mesure de vibrations en fonction du temps,

- un spectre de vibrations est la moyenne des transformées de Fourier de plusieurs mesures consécutives de vibrations en fonction du temps à conditions égales,

- on réalise entre 3 et 6, de préférence 5 mesures consécutives de vibrations en fonction du temps,

- on identifie une bande significative de fréquences sur un spectre de vibrations par comparaison des spectres de vibrations pris à des valeurs de paramètre dynamique de coupe différentes,

- on identifie une structure émergeante du spectre apparaissant à différentes valeurs de paramètre dynamique de coupe comme une bande significative de fréquences,

- on détermine une valeur résultante de puissance de bande significative de fréquences en fonction des valeurs de paramètre dynamique de coupe,

- on détermine au moins un point de fonctionnement comme étant une valeur du paramètre dynamique de coupe qui est située dans une plage de variation limitée de la valeur résultante de puissance soit entre deux maxima de valeur résultante de puissance, soit entre la valeur la plus faible du paramètre dynamique de coupe et le premier maximum de la valeur résultante de puissance,

- on détermine le point de fonctionnement ayant la valeur du paramètre dynamique de coupe la plus élevée comme point de fonctionnement optimisé,

- on détermine plusieurs plages admissibles de fonctionnement.

L'invention a également pour objet un procédé de commande d'une machine outil dans lequel on détermine un point de fonctionnement selon un procédé tel que défini ci-dessus et l'on règle la valeur du paramètre dynamique de coupe selon le point de fonctionnement déterminé.
Le procédé de commande peut comporter une ou plusieurs des caractéristiques suivantes prises seules ou en combinaison :

- on détermine comme point de fonctionnement le point de fonctionnement optimisé tel que défini ci-dessus.

- on détermine plusieurs plages de fonctionnement selon un procédé tel que défini ci-dessus et l'on règle la valeur du paramètre dynamique de coupe selon un point de fonctionnement se situant dans la plage des valeurs de paramètre de coupe de coupe plus élevées.

- Selon un autre aspect,

  ○ on règle la vitesse de coupe selon un point de fonctionnement se situant dans la plage de vitesses de coupe plus élevées,

  ○ on surveille l'usure de l'outil lors des opérations de coupe,

  ○ on diminue la vitesse de coupe selon un point de fonctionnement se situant dans la plage de vitesses de coupe la plus faible lorsqu'une usure prédéfinie a été relevée lors de la surveillance.

On peut surveiller l'usure de l'outil en mesurant l'évolution de la puissance totale d'un spectre de vibrations.

L'invention a en outre pour objet un dispositif de détermination d'au moins un point de fonctionnement d'une machine-outil pour une configuration donnée outil - matière à usiner dans la machine-outil, comprenant des moyens de traitement adaptés pour :

- mesurer à l'intérieur d'une plage prédéfinie d'un paramètre dynamique de coupe des spectres de vibrations,

- identifier sur les spectres de vibrations des bandes significatives de fréquences,

- déterminer des valeurs de puissance des bandes significatives de fréquences en fonction du paramètre dynamique de coupe,

- déterminer au moins un point de fonctionnement à partir des variations des valeurs de puissance en fonction du paramètre dynamique de coupe.

Ce dispositif peut comporter une ou plusieurs des caractéristiques suivantes prises seules ou en combinaison :

- les valeurs de puissance des bandes significatives de fréquences correspondent à des amplitudes maximales des bandes significatives de fréquences ou à des valeurs d'aire des bandes significatives de fréquences,

- les moyens de traitement sont configurés de manière à mesurer les spectres de vibrations à l'intérieur d'une plage prédéfinie du paramètre dynamique de coupe à intervalles réguliers,

- le paramètre dynamique de coupe est la vitesse de coupe ou la vitesse d'avance,

- la vitesse d'avance est fixée à une valeur prédéfinie et le paramètre dynamique de coupe est la vitesse de coupe,

- la vitesse de coupe est fixée à une valeur prédéfinie et le paramètre dynamique de coupe est la vitesse d'avance,

- la valeur prédéfinie de la vitesse de coupe est déterminée tel que définie ci-dessus, en particulier pour une opération de perçage.

- les moyens de traitement sont adaptés pour mesurer les spectres de vibrations à l'intérieur d'une plage prédéfinie de vitesses de coupe à intervalles réguliers,

- l'intervalle des vitesses de coupe est compris entre 15m/min et 25m/min, en particulier de 20m/min pour une opération d'usinage ou de fraisage,

- l'intervalle des vitesses de coupe est compris entre 5m/min et 15m/min, en particulier de 10m/min pour une opération de perçage,

- la plage prédéfinie des vitesses de coupe comprend la plage admissible des valeurs du paramètre dynamique de coupe de la machine outil,

- les moyens de traitement sont adaptés pour mesurer les spectres de vibration avec au moins un accéléromètre par exemple placé sur la machine-outil, de préférence au niveau de l'outil de coupe,

- les moyens de traitement comprennent au moins un accéléromètre,

- les moyens de traitement comprennent au moins un accéléromètre multiaxial,

- ledit au moins un accéléromètre possède une réponse fréquentielle jusqu'à au moins 25kHz,

- les moyens de traitement sont adaptés pour un temps d'acquisition de signaux de vibration pour un spectre de vibration inférieur à 50ms, de préférence compris entre 15ms et 25 ms, en particulier 20ms,

- les moyens de traitement sont adaptés pour mesurer les spectres de vibration en appliquant une transformée de Fourier à une mesure de vibrations en fonction du temps,

- les moyens de traitement comprennent un microprocesseur programmé pour calculer des transformées de Fourier des mesures de vibrations en fonction du temps,

- les moyens de traitement sont adaptés pour calculer un spectre de vibration comme la moyenne des transformées de Fourier de plusieurs mesures consécutives de vibrations en fonction du temps à conditions égales,

- les moyens de traitement sont adaptés pour identifier une bande significative de fréquences sur un spectre de vibration par comparaison des spectres de vibrations pris à des valeurs de paramètre dynamique de coupe différentes,

- les moyens de traitement sont adaptés pour identifier une structure émergeante du spectre apparaissant à différentes vitesses de coupes comme une bande significative de fréquences,

- les moyens de traitement sont adaptés pour déterminer une valeur résultante de puissance de bande significative de fréquences en fonction des valeurs de paramètre dynamique de coupe,

- les moyens de traitement sont adaptés pour déterminer au moins un point de fonctionnement comme étant une valeur du paramètre dynamique de coupe qui est située dans une plage de variation limitée de la valeur résultante de puissance soit entre deux maxima de valeur résultante de puissance, soit entre la valeur la plus faible du paramètre dynamique de coupe et le premier maximum de la valeur résultante de puissance,

- les moyens de traitement sont adaptés pour déterminer le point de fonctionnement ayant la valeur la plus élevée comme point de fonctionnement optimisé,

- les moyens de traitement sont adaptés pour déterminer plusieurs domaines admissibles de fonctionnement,

L'invention a également pour objet un module de commande d'une machine outil, en particulier d'une machine-outil à commande numérique comprenant un dispositif tel que défini ci-dessus et une sortie de commande de la vitesse de coupe selon le point de fonctionnement déterminé adapté à être branché sur une entrée correspondante d'une machine-outil.

L'invention a en outre pour objet une machine - outil comprenant un module de commande tel que défini ci-dessus.

Par ailleurs, l'invention a pour objet une unité programmable comprenant des moyens de mémorisation et un programme d'ordinateur mémorisé dans ces moyens de mémorisation, le programme d'ordinateur comprenant des instructions pour réaliser les étapes d'un procédé tel que défini ci-dessus.

L'invention a encore pour objet un programme d'ordinateur comprenant des instructions pour réaliser les étapes d'un procédé tel que défini ci-dessus.

D'autres avantages et caractéristiques apparaîtront à la lecture de la description de l'invention, ainsi que des dessins annexés sur lesquels :

- la figure 1 montre de façon schématique une machine-outil à commande numérique équipée d'un module de commande comprenant un dispositif selon l'invention,

- la figure 2 montre un schéma illustrant des mouvements de l'outil par rapport à la pièce à usiner pour un processus de chariotage,

- la figure 3 montre un schéma illustrant des mouvements d'un foret par rapport à une pièce à percer pour un processus de perçage sur tour,

- la figure 4 montre selon une vue schématique de coté d'un porte-outil de la machine de la figure 1,

- la figure 5 montre un schéma synoptique d'un module de commande comprenant un dispositif selon l'invention,

- la figure 6 montre un exemple d'un spectre de vibrations obtenu par mesure,

- la figure 7 montre un exemple d'un graphique obtenu à partir de divers spectres de vibrations et montrant pour chaque courbe correspondant à une bande significative de fréquences l'évolution de l'amplitude maximale en fonction de la vitesse de coupe,

- la figure 8 montre un exemple d'un graphique montrant la variation de la résultante de la figure 7, en fonction de la vitesse de coupe,

- la figure 9 montre un autre exemple d'un graphique avec deux domaines de fonctionnement,

- la figure 10 montre un organigramme des différentes étapes du procédé de détermination d'au moins un point de fonctionnement d'une machine-outil, et

- la figure 11 montre un organigramme d'un procédé de commande d'une machine outil.

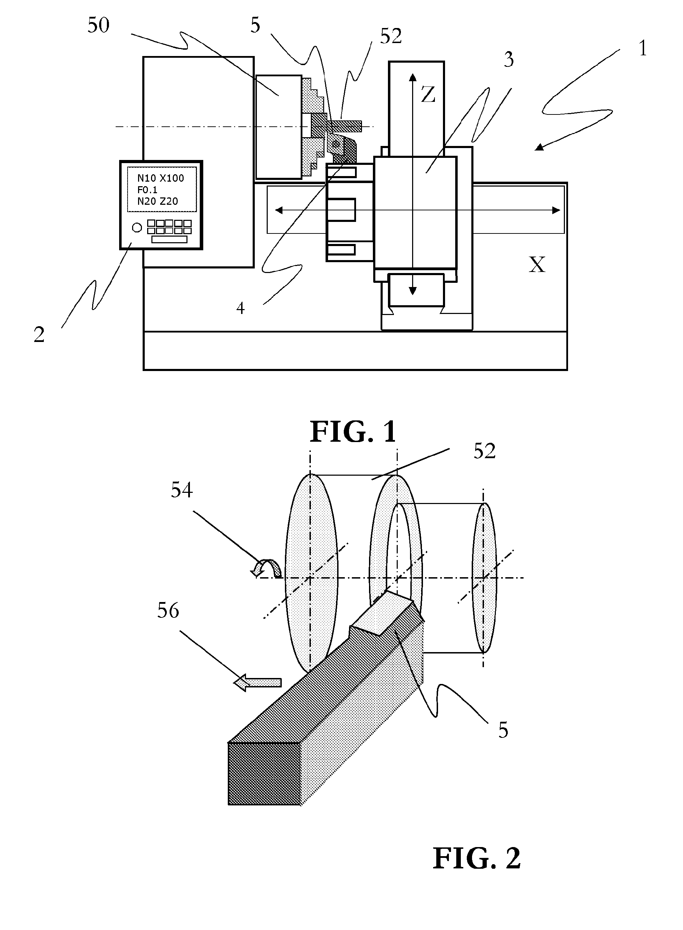

La figure 1 montre de façon schématique une machine-outil 1 à commande numérique.

Cette machine-outil 1 peut être une machine-outil spécifique pour seulement un type d'opération comme l'usinage, le tournage, le perçage, le fraisage, le décolletage, le fonçage, le chariotage, le taraudage ou être une machine-outil multifonctions permettant séquentiellement différents types d'opérations.

Cette machine-outil peut être adaptée pour l'usinage au sens large de pièces métalliques, mais aussi pour des pièces en matière plastique ou des matériaux composites.

Bien entendu, d'autres configurations de machines-outils sont envisageables sans sortir du cadre de la présente invention.

Elle est équipée d'un outil 5 ou d'une tourelle de divers outils qui peuvent être changés automatiquement en fonction de l'opération envisagée ou encore être équipée d'un mandrin pour tenir un foret pour des opérations de perçage sur tour.

La machine-outil 1 de la figure 1 est à titre d'exemple pourvue d'un porte-outil 3 déplaçable en fonction des commandes selon au moins deux directions, X et Z, orthogonales, et d'un mandrin de fixation 50 de la pièce à usiner 52 qui tourne. Ainsi, en tournage, l'outil 5 ne se déplace qu'en translation et c'est la pièce à usiner 52 qui tourne lors des opérations d'usinage.

La machine-outil 1 possède une commande numérique 2. Cette commande numérique commande tout déplacement relatif entre la pièce 52 et l'outil 5 ainsi que les paramètres de coupe de l'opération envisagée, en particulier elle commande les paramètres dynamiques de coupe que sont la vitesse de coupe et la vitesse d'avance. Le cas échéant, elle commande et contrôle également la lubrification lors de l'opération de l'usinage.

La vitesse de coupe est la vitesse relative de l'outil 5 par rapport à la pièce 52. Il s'agit donc de la vitesse tangentielle entre le point de contact de la pièce coïncidant avec la pointe de l'outil.

L'avance est la distance que parcourt l'outil pendant une révolution de la pièce.

La figure 2 montre un schéma pour illustrer les mouvements de l'outil 5 par rapport à la pièce 52 à usiner pour un processus de chariotage. La flèche 54 représente la rotation à la vitesse de coupe et la flèche 56 représente le déplacement selon la vitesse d'avance.

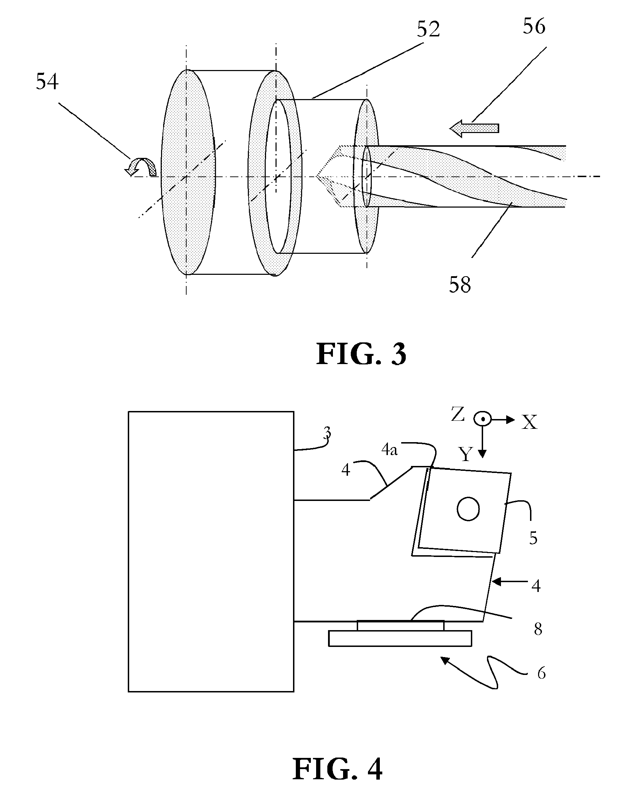

La figure 3 montre un schéma pour illustrer les mouvements d'un foret par rapport à une pièce 52 à percer pour un processus de perçage sur tour par un foret 58 (ayant ici la fonction de l'outil 5). La flèche 54 représente la rotation à la vitesse de coupe et la flèche 56 représente le déplacement selon la vitesse d'avance.

La vitesse de coupe et la vitesse d'avance sont considérées comme des paramètres dynamiques de coupe, en ce sens qu'elles sont des paramètres permettant de définir le déplacement relatif entre l'outil et la pièce à usiner. Ce sont des paramètres déterminants pour fixer les conditions d'usinage.

La figure 4 illustre à titre d'exemple un porte-outil 3 destiné à être monté sur la machine-outil de la figure 1

Le porte-outil 3 comporte un porte-plaquette 4 interchangeable apte à recevoir une plaquette de coupe 5 (l'outil) pour l'usinage de la pièce 52.

On peut prévoir que la plaquette de coupe 5 est montée contre une sous-plaquette 4a, de préférence en carbure.

La plaquette de coupe 5, présentant dans cet exemple une forme rhombique, est par exemple en matériau fritté (carbure ou céramique).

La plaquette 5 est portée et maintenue fixe au porte-plaquette 4 correspondant par une fixation classique, par exemple brasée sur le porte-plaquette 4 ou montée de manière amovible.

Dans le cadre de la présente invention, au moins un capteur de mesure 6, de préférence un accéléromètre mono-axial ou multiaxial est fixé. Cet accéléromètre est placé par exemple au plus près de l'outil 5. Toutefois, un placement plus éloigné de l'accéléromètre peut être envisagé. En particulier dans le cadre d'une machine-outil possédant une tourelle d'outil pour un changement automatique, on peut envisager de placer l'accéléromètre sur la tourelle, par exemple au niveau du centre, de sorte que l'accéléromètre puisse mesurer les vibrations pour tous les outils dont la tourelle est équipée.

Il a été constaté lors de la mise au point de l'invention que l'orientation de l'accéléromètre n'avait pas d'influence sur le résultat final.

L'accéléromètre est par exemple fixé par une colle 8, par vissage ou par fixation magnétique.

Il peut s'agir d'un accéléromètre à détection piézoélectrique ou à jauge de contrainte. Un accéléromètre basé sur la nanotechnologie peut aussi être envisagé.

En variante l'accéléromètre peut aussi être un accéléromètre sans contact, par exemple à détection optique, capacitif ou à détection à effet Hall.

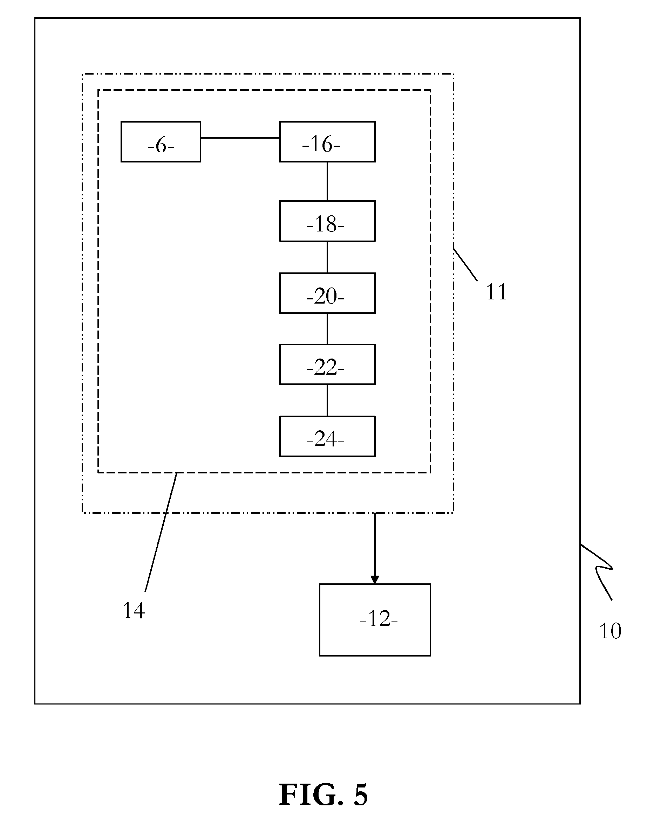

La figure 5 montre un schéma synoptique d'un module de commande 10 d'une machine-outil 1.

Ce module de commande 10 d'une machine outil 1, en particulier d'une machine-outil à commande numérique comprend un dispositif 11 de détermination d'au moins un point de fonctionnement d'une machine-outil et une sortie 12 de commande d'un paramètre dynamique de coupe, par exemple la vitesse de coupe ou la vitesse d'avance, selon le point de fonctionnement déterminé, adapté à être branché sur une entrée correspondante de la machine-outil.

Il est important de constater que l'on peut utiliser le dispositif 11 soit comme faisant partie intégrale d'une commande numérique d'une machine-outil, soit de façon seule (solution « stand-alone », c'est-à-dire en tant qu'outil isolé), par exemple pour une machine-outil

- qui ne possède pas une entrée spécifique pour un signal extérieur, ou

- qui ne possède pas d'unité de commande numérique, mais dont la vitesse de coupe ou la vitesse d'avance peut être modifiée ou optimisée par exemple par un opérateur.

Dans ce dernier cas, on envisage l'utilisation du dispositif 11 en tant qu'instrument de réglage. Il peut être réalisé sous la forme d'un micro-ordinateur ou d'un calculateur avec une interface d'utilisateur comme un écran et un clavier.

Dans la mise en oeuvre, ce micro-ordinateur donne par exemple pour la phase d'acquisition de données, c'est-à-dire les mesures de vibrations en fonction de différentes valeurs des paramètres dynamique de coupe, les consignes en termes d'avance et de vitesse de coupe.

On distingue notamment deux cas.

Selon le premier cas, on souhaite déterminer un point de fonctionnement ou un domaine de fonctionnement pour la vitesse de coupe. Pour ce faire, on fixe la vitesse d'avance à une valeur prédéfinie et on fait varier la vitesse de coupe dans une certaine plage pour des mesures de vibrations.

Selon le second cas, on souhaite déterminer un point de fonctionnement ou un domaine de fonctionnement pour la vitesse d'avance, en particulier pour une opération de perçage. Pour ce faire, on fixe la vitesse de coupe à une valeur prédéfinie, et on fait varier la vitesse d'avance dans une certaine plage pour des mesures de vibration.

Dans ce second cas, on envisage de fixer la vitesse de coupe prédéfinie en la déterminant au préalable selon le premier cas ci-dessus par variation de la vitesse de coupe à vitesse d'avance constante. Ainsi, on applique le procédé selon l'invention une première fois pour déterminer un point de fonctionnement pour la vitesse de coupe, puis en fixant cette vitesse de coupe à cette valeur optimisée, on détermine un point de fonctionnement optimisé pour la vitesse d'avance.

De façon générale, on note que la description qui suit va traiter le premier cas concernant la vitesse de coupe pour illustrer les diverses aspects de l'invention. Pour la détermination d'une vitesse d'avance, les diverses étapes s'appliquent de la même manière pour déterminer un point de fonctionnement pour la vitesse d'avance.

Dans une version plus évoluée, ce micro-ordinateur peut dans un premier temps interroger quel type d'opération doit faire objet de mesures de vibrations par exemple une opération de décolletage, de fraisage, de perçage et autre et proposer ensuite directement les vitesses d'avance et de coupe adaptées. Il peut aussi demander le type et la marque de la machine outil pour en connaître les plages admissibles d'avance et de rotation en fonction des données constructeur.

Ainsi, aussi bien les vitesses de consignes pour les mesures de spectres de vibrations que la valeur du ou des points de fonctionnement peuvent être restreintes aux plages admissibles de la machine-outil.

A l'intérieur d'une plage prédéfinie, les spectres de vibrations sont mesurés par exemple à intervalles réguliers de la valeur du paramètre dynamique de coupe.

Aussi bien en tant que module intégré ou branché sur une machine-outil numérique qu'en dispositif de diagnostic comme décrit ci-dessus, les moyens 11 donnent par exemple dans le cas de la vitesse de coupe comme paramètre dynamique de coupe

- un intervalle des vitesses de coupe compris entre 15m/min et 25m/min, en particulier de 20m/min pour une opération d'usinage ou de fraisage, et

- un intervalle des vitesses de coupe compris entre 5m/min et 15m/min, en particulier de 10m/min pour une opération de perçage.

Dans le cadre d'une machine-outil numérique, lors de la phase d'acquisition, des consignes d'avance et de vitesse peuvent être données automatiquement à la machine-outil, de manière à ce que l'acquisition des spectres soit aussi entièrement automatisée.

La plage prédéfinie des vitesses de coupe et ou de la vitesse d'avance peut comprendre toute ou partie de la plage admissible des vitesses de coupe et / ou d'avance de la machine outil.

La sortie 12 peut aussi par exemple être un simple afficheur donnant après l'analyse de mesures de vibrations une consigne d'un ou plusieurs points de fonctionnement, par exemple sous forme d'une vitesse de coupe ou d'une vitesse d'avance, d'un domaine admissible de valeurs du paramètre dynamique de coupe considéré.

Le dispositif 11 de détermination d'au moins un point de fonctionnement d'une machine-outil pour une configuration donnée outil - matière à usiner dans la machine-outil, comprend des moyens de traitement 14 adaptés pour :

- mesurer à l'intérieur d'une plage prédéfinie d'un paramètre dynamique de coupe tel que la vitesse de coupe ou la vitesse d'avance, des spectres de vibrations,

- identifier sur les spectres de vibrations des bandes significatives de fréquences,

- déterminer des valeurs de puissance comme par exemple les amplitudes maximales des bandes significatives ou encore l'aire de chaque bande significative de fréquences en fonction du paramètre dynamique de coupe,

- déterminer à partir des variations des valeurs de puissance en fonction du paramètre dynamique de coupe considéré tel que la vitesse de coupe, au moins un point de fonctionnement.

Plus en détail, ces moyens 14 comprennent au moins l'accéléromètre 6 (voir aussi figure 4) évoqué ci-dessus pour mesurer les vibrations lors de l'usinage. Cet accéléromètre possède selon un aspect une réponse fréquentielle s'étendant jusqu'à au moins 25kHz.

L'accéléromètre 6 est raccordé par exemple via une liaison filaire à une unité d'acquisition 16. Cette unité peut par exemple être une carte d'acquisition insérée dans le microordinateur, comprenant un convertisseur analogique - numérique.

Cette unité 16 est configurée de manière que le temps d'acquisition de signaux de vibration pour un spectre de vibration soit inférieur à 50ms, de préférence compris entre 15ms et 25 ms, en particulier 20ms. Par cela, on comprend que l'outil est en contact avec la matière à usiner pendant par exemple 20ms et l'on mesure pendant ce temps les signaux de vibrations en fonction du temps avec un échantillonnage adapté pour par exemple une bande de fréquence comprise entre 0 et 25kHz. Ce temps de contact par exemple de 20ms est suffisant pour recueillir assez de données caractéristiques de mesure.

Dans le présent contexte, le terme « vibration » est synonyme « d'accélérations » détectées par l'accéléromètre.

L'unité 16 est par la suite raccordée à une unité de calcul 18 des transformées de Fourier appliquées aux mesures de vibrations réalisées en fonction du temps. Cette unité 18 comprend par exemple un microprocesseur.

Afin de diminuer des contributions non caractéristiques, l'unité 16 est également adaptée pour calculer un spectre de vibration comme la moyenne des transformées de Fourier de plusieurs mesures consécutives de vibrations en fonction du temps à conditions égales.

Ainsi par exemple, en appliquant les mêmes conditions d'avance et de vitesse de coupe, on mesure cinq fois les vibrations en fonction du temps, on applique à chacune des mesures une transformée de Fourier, et le spectre moyen est calculé pour chaque fréquence comme la moyenne des valeurs de chaque transformée de Fourier à cette même fréquence.

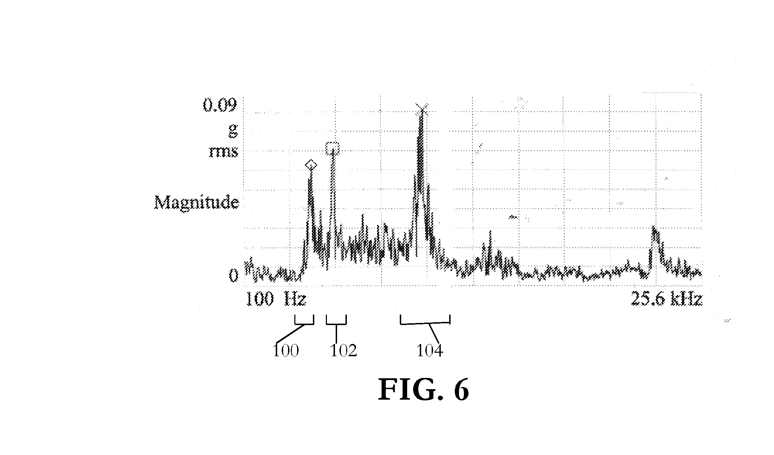

En prenant comme paramètre dynamique de coupe la vitesse de coupe, la vitesse d'avance étant fixée à une valeur prédéfinie au préalable, un spectre représentatif mesuré par un accéléromètre a été présenté à titre d'exemple sur la figure 6 qui montre l'accélération en valeur de g (g- étant l'accélération de la pesanteur) en fonction de la fréquence.

On constate donc que les vibrations ne sont pas dans le présent exemple mesurées en termes d'amplitude de déplacements, mais en termes d'accélérations.

L'unité 18 est reliée à une unité 20 d'identification d'une bande significative de fréquences sur un spectre de vibrations par comparaison des spectres de vibrations pris à des valeurs différentes du paramètre dynamique de coupe comme la vitesse de coupe.

L'opération de cette unité d'identification sera décrite plus en détail en relation avec le procédé. Il s'agit en particulier d'identifier des structures émergeantes du spectre apparaissant de manière répétitive à différentes valeurs du paramètre dynamique de coupe comme une bande significative de fréquences.

Dans l'exemple du spectre de la figure 6, trois bandes de fréquences 100, 102 et 104 ont été identifiées comme significatives.

L'unité 20 d'identification est raccordée à une unité 22 de détermination d'une valeur résultante de puissance de bande significative de fréquences en fonction des valeurs de paramètre dynamique de coupe, comme par exemple la vitesse de coupe.

A cet effet, l'unité 22 détermine une valeur de puissance pour chaque bande significative de fréquences.

Par « valeur de puissance » d'une bande significative de fréquences, on entend une valeur qui est représentative de la quantité d'accélération ou de vibration subie par l'outil 5 lors des mesures. Les valeurs de puissance peuvent être des valeurs relatives et ne doivent pas être normées ou calibrées.

Il peut ainsi s'agir par exemple de l'amplitude maximale constaté dans une bande significative de fréquences ou par exemple de l'aire de la bande significative de fréquences.

Sur la figure 6 par exemple, la bande significative 100 se situe autour de 3kHz et sa valeur de puissance correspond par exemple à l'amplitude maximale de 0,63g, la bande significative 102 se situe autour de 5kHz et sa valeur de puissance correspond par exemple à l'amplitude maximale de 0,7g, et la bande significative 104 se situe autour de 10kHz et sa valeur de puissance correspond par exemple à l'amplitude maximale de 0,9g.

Bien entendu, d'autres valeurs de puissance peuvent être envisagées sans sortir du cadre de la présente invention, comme par exemple des amplitudes maximales au carrée.

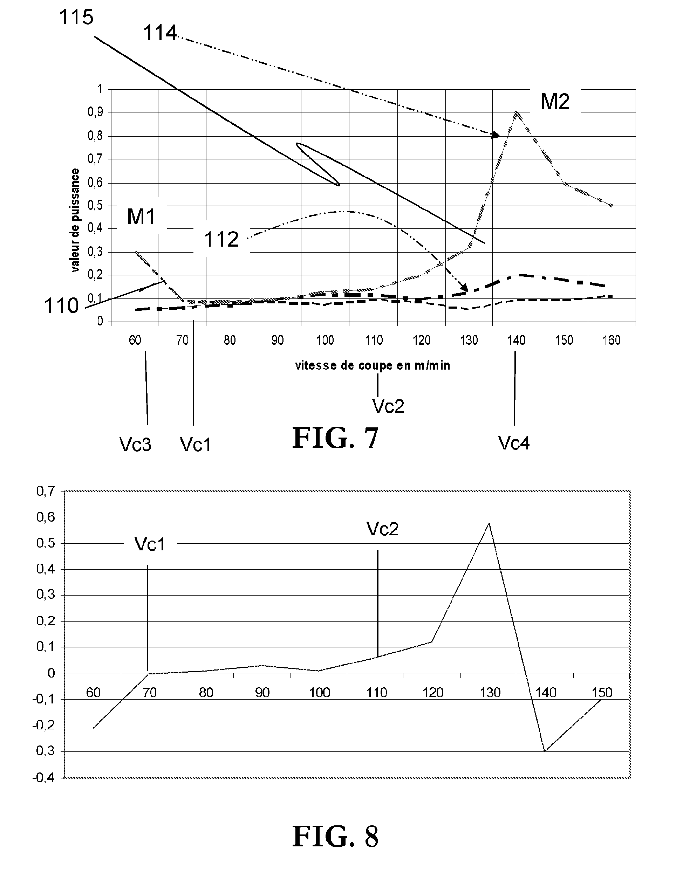

Ces valeurs de puissance sont utilisées ensuite comme cela est illustré sur la figure 7 de façon graphique. On note que cette représentation graphique sert à expliquer et illustrer certains aspects de l'invention, mais ne sont pas nécessaires pour la mise en oeuvre.

La table suivante reproduit les valeurs de mesure du graphique de la figure 7.

| Vitesse de coupe en mètre / min | Valeur de puissance Courbe 110 | Valeur de puissance Courbe 112 | Valeur de puissance Courbe 114 | Valeur de puissance Résultante courbe 115 |
|---|---|---|---|---|
| 60 | 0,3 | 0,05 | 0,05 | 0,3 |
| 70 | 0,09 | 0,06 | 0,06 | 0,09 |
| 80 | 0,075 | 0,07 | 0,09 | 0,09 |
| 90 | 0,08 | 0,1 | 0,095 | 0,1 |
| 100 | 0,07 | 0,12 | 0,13 | 0,13 |
| 110 | 0,095 | 0,12 | 0,14 | 0,14 |
| 120 | 0,08 | 0,1 | 0,2 | 0,2 |
| 130 | 0,05 | 0,125 | 0,32 | 0,32 |
| 140 | 0,095 | 0,2 | 0,9 | 0,9 |
| 150 | 0,095 | 0,18 | 0,6 | 0,6 |
| 160 | 0,11 | 0,15 | 0,5 | 0,5 |

On voit donc que les spectres ont été mesurés entre 60m/min et 160m/min, à intervalles égaux de 10m/min.

On retient pour chaque valeur du paramètre dynamique de coupe, tel que la vitesse de coupe la valeur d'amplitude maximale de chaque bande significative de fréquences. Ainsi, pour trois bandes significatives de fréquences, on obtiendra trois valeurs par vitesse de coupe.

Sur la figure 7, on a relié les amplitudes maximales pour chaque bande significative de fréquences.

Ainsi, la courbe (le fait de relier les points a pour but de guider l'oeil du lecteur) 110 correspond aux maxima d'amplitude de la première bande significative de fréquences (bande 100 de la figure 6) en fonction de la vitesse de coupe, la courbe 112 correspond aux maxima d'amplitude de la deuxième bande significative de fréquences (bande 102 de la figure 6) en fonction de la vitesse de coupe, et la courbe 114 correspond aux maxima d'amplitude de la troisième bande significative (bande 104 de la figure 6) en fonction de la vitesse de coupe.

On comprend donc que dans cet exemple, on obtient pour chaque valeur de paramètre dynamique de coupe, c'est-à-dire pour chaque vitesse de coupe à la quelle on a mesuré un spectre, trois valeurs de puissance.

Puis, à partir de ces courbes, l'unité 22 détermine une valeur résultante de puissance de bande significative de fréquences.

Cette résultante est par exemple la moyenne simple des valeurs de puissance, la moyenne des valeurs de puissance au carrée ou encore simplement pour chaque valeur de paramètre dynamique de coupe, à chaque vitesse de coupe, le maximum des valeurs de puissance déterminées. Cette valeur permet de faire la synthèse entre les différentes courbes déterminées.

Cette valeur résultante sur la base des maxima est représentée par la courbe 115 sur la figure 7. En particulier en dessous de 70m/min la résultante est confondue avec la courbe 110 et à partir d'une vitesse de coupe de 110 m/min, elle se confond avec la courbe 114 étant donné que les valeurs de puissance spectrale sont les plus élevées (voir aussi la table reproduite ci-dessus).

Pour déterminer au moins un point de fonctionnement, on analyse les variations de la valeur résultante. Pour cela, on calcule par exemple la première dérivée sous forme discrète :

$$\Delta A = \frac{A_i - A_{i-1}}{Vc_i - Vc_{i-1}}$$

Où $A_i$ est la valeur de la résultante de puissance à la vitesse de coupe $Vc_i$.

L'unité 22 de détermination d'une valeur résultante est raccordée à une unité 24 de détermination d'au moins un point de fonctionnement comme étant une valeur du paramètre dynamique de coupe qui est située dans une plage de variation limitée de la valeur résultante de puissance entre deux maxima $M_1$ et $M_2$ de valeur résultante de puissance.

Un point de fonctionnement ou un domaine de fonctionnement est également donné si on constate une variation limitée de la valeur résultante de puissance entre la valeur la plus faible du paramètre dynamique de coupe et le premier maximum de la valeur résultante de puissance.

Par variation limitée, on entend une variation proche de zéro, de préférence inférieure à 20%, voir 10% de la variation maximale constatée.

Pour illustrer ces propos, on a tracé sur la figure 8 la variation de la courbe 115 de la figure 7, c'est-à-dire la dérivée discrète en fonction de la vitesse de coupe.

Dans le cadre du présent exemple, c'est-à-dire de la détermination d'une vitesse de coupe, on détermine d'une part les maxima $M_1$ et $M_2$ et entre ces maxima la plage de variation limitée entre une première vitesse de coupe $Vc_1$ de valeur de 70m/min inférieure à une deuxième vitesse de coupe $Vc_2$ de valeur 110m / min. Ces première et deuxième vitesses de coupe étant comprises entre une troisième $Vc_3$ = 60m/min et une quatrième vitesses $Vc_4$ = 140m/min de coupe correspondant respectivement aux deux maxima d'amplitude $M_1$ et $M_2$.

Ce domaine de vitesses de coupe comprises entre la première et la deuxième de vitesse de coupe est déterminé comme domaine de fonctionnement admissible par les moyens de traitement 14.

Ainsi, en choisissant la vitesse de coupe dans la plage entre 70 et 110m/min, la machine-outil opère dans de bonnes conditions.

On détermine par les moyens de traitement 14 le point de fonctionnement de valeur la plus élevée, c'est-à-dire $Vc_2$ de valeur 110m/min, comme point de fonctionnement optimisé, étant donné qu'il permet d'augmenter la productivité de la machine-outil.

Lors des analyses et la mise au point de l'invention, il a été constaté de façon surprenante qu'il pouvait y avoir une succession de maxima comme ceux de $M_1$ et $M_2$ de la figure 7, et qu'entre ces maximas, on pouvait également déterminer d'autres domaines de fonctionnement comme indiqué ci-dessus, mais à des valeurs du paramètre dynamique de coupe (par exemple la vitesse de coupe) assez élevées, voir dépassant les valeurs admissibles de la machine outil.

Il s'est donc montré que des structures comme celles de la figure 7 se répètent par la suite, de sorte qu'en appliquant les mêmes procédés et algorithmes que ceux décrit précédemment, on découvre d'autres domaines admissibles de fonctionnement à des vitesses de coupe plus élevées. Les moyens 14 sont adaptés pour déterminer plusieurs domaines admissibles de fonctionnement.

Ce résultat est d'autant plus surprenant que ces nouveaux domaines de fonctionnement sont contraires aux consignes traditionnelles et devraient aboutir à une usure prématurée de l'outil.

Or il a été constaté que ces domaines de vitesses de coupe plus élevées peuvent aussi être utilisés et augmentent de façon considérable la productivité.

On doit également mentionner que ces domaines de fonctionnement à des vitesses de coupes plus élevées sont généralement plus étroits et ne peuvent être identifiés que par la présente invention.

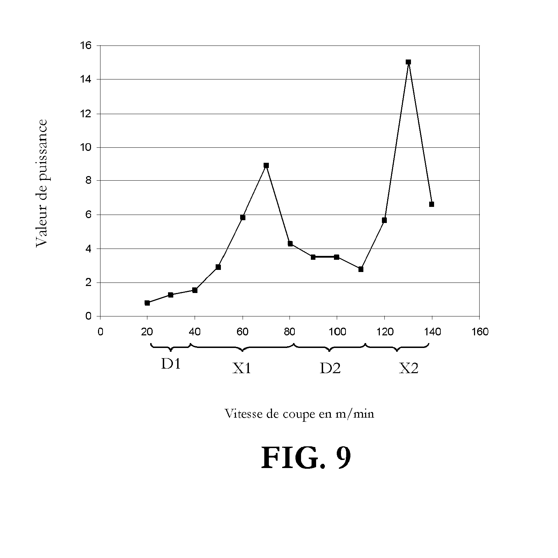

La figure 9 est un graphique équivalent à celui de la figure 7, mais pour un alliage différent.

On constate que sur cette figure, on détermine deux domaines de fonctionnement pour la vitesse de coupe, un premier domaine D1 compris entre 20m/min et 40m/min et un second domaine D2 entre 80m/min et 110m/min.

On observe non seulement qu'il y a deux domaines D1 et D2 pour la vitesse de coupe dans lesquels la machine outil fonctionne dans de bonnes conditions, mais aussi deux domaines X1 et X2 qui sont en dehors de ces bons domaines de fonctionnement et dans lesquels la machine-outil fonctionne dans de mauvaises conditions ce qui aura pour conséquence une usure prématurée de l'outil et/ou une mauvaise qualité des pièces.

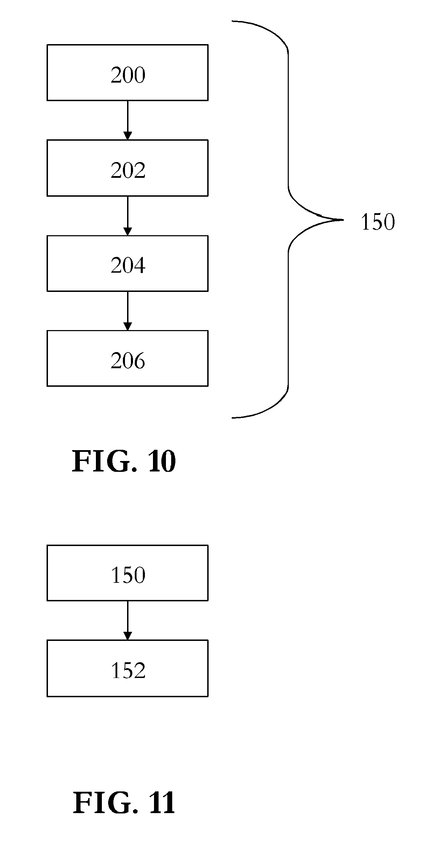

En relation avec la figure 10 montrant les diverses étapes du procédé 150 de l'invention mise en oeuvre par le dispositif 11 et en prenant en exemple la vitesse de coupe comme paramètre dynamique de coupe (pour la vitesse d'avance, les considérations sont similaires), le fonctionnement de ce dernier est le suivant :

Lors d'une étape 200, on mesure pour plusieurs vitesses de coupe des spectres de vibrations, en particulier à l'intérieur d'une plage prédéfinie de vitesses de coupe à intervalles réguliers.

L'intervalle des vitesses de coupe est compris entre 15m/min et 25m/min, en particulier de 20m/min pour une opération d'usinage ou de fraisage.

L'intervalle des vitesses de coupe est compris entre 5m/min et 15m/min, en particulier de 10m/min pour une opération de perçage.

La plage prédéfinie des vitesses de coupe comprend toute la plage admissible des vitesses de coupe de la machine outil. On va au-delà des consignes des vitesses de coupe des méthodes traditionnelles.

On obtient les spectres de vibration avec au moins un accéléromètre placé sur la machine-outil, de préférence au niveau de l'outil de coupe. Selon un aspect, la plage de fréquences des spectres de vibration s'étend jusqu'à au moins 25kHz,

Le temps d'acquisition de signaux de vibration pour un spectre de vibration est inférieur à 50ms, de préférence compris entre 15ms et 25 ms, en particulier 20ms.

Plus en détail, on obtient les spectres de vibration en appliquant une transformée de Fourier à une mesure de vibrations en fonction du temps.

Pour diminuer des contributions non caractéristiques, on obtient un spectre de vibration par la moyenne des transformées de Fourier de plusieurs mesures consécutives de vibrations en fonction du temps à conditions égales.

Pour optimiser le temps d'acquisition des spectres et la diminution des contributions non-caractéristiques, on a réalise entre 3 et 6, de préférence 5 mesures consécutives de vibrations en fonction du temps.

Un résultat tel que déjà expliqué plus haut est représenté sur la figure 6.

Puis, lors d'une étape 202, on identifie sur les spectres de vibrations des bandes significatives de fréquences (voir figure 6). Plus spécifiquement, on identifie une bande significative de fréquences sur un spectre de vibration par comparaison des spectres de vibrations pris à des vitesses de coupes différentes. Si on identifie une structure émergeante du spectre apparaissant à différentes vitesses de coupes, alors il s'agit d'une bande significative de fréquences.

Ainsi, on détermine lors d'une étape 204 par exemple les amplitudes maximales des bandes significatives de fréquences en fonction des vitesses de coupe.

Par la suite, lors d'une étape 206, on détermine à partir des variations des amplitudes maximales en fonction des vitesses de coupe au moins un point de fonctionnement comme expliqué ci-dessus.

Plus spécifiquement comme expliqué plus haut, on détermine une valeur résultante de puissance de bande significative de fréquences en fonction des valeurs de paramètre dynamique de coupe, et on détermine au moins un point de fonctionnement comme étant une valeur du paramètre dynamique de coupe qui est située dans une plage de variation limitée de la valeur résultante de puissance entre deux maxima de valeur résultante de puissance.

La plage de vitesses de coupe entre la première et la deuxième vitesse de coupe est donc déterminée comme domaine de fonctionnement admissible et la deuxième vitesse de coupe comme point de fonctionnement optimisé car elle permet une productivité accrue.

Comme on l'a constaté, on peut déterminer par le même procédé plusieurs domaines admissibles de fonctionnement, les domaines de fonctionnement à une vitesse plus élevée permettant d'accroître davantage la productivité.

En se référant à la figure 11 montrant les étapes d'un procédé de commande d'une machine outil mise en oeuvre par le module 10 dans lequel on détermine un point de fonctionnement selon le procédé 150 tel que décrit ci-dessus et l'on règle la vitesse de coupe selon le point de fonctionnement déterminé lors d'une étape 152.

Selon un aspect particulier, on détermine comme point de fonctionnement la deuxième vitesse de coupe $Vc_2$

pour obtenir une productivité améliorée.

Si par le procédé 150, on détermine plusieurs domaines de fonctionnement, l'on règle la vitesse de coupe selon un point de fonctionnement se situant dans le domaine de vitesses de coupe plus élevées, ce qui permet un accroissement important de la productivité.

Par exemple en relation avec la figure 9 on choisirait dans le domaine D2 la vitesse de 110m/min comme vitesse de coupe.

Selon encore un autre aspect, on règle la vitesse de coupe selon un point de fonctionnement se situant dans le domaine de vitesses de coupe plus élevées, et l'on surveille l'usure de l'outil lors des opérations de coupe, et puis on diminue la vitesse de coupe selon un point de fonctionnement se situant dans le domaine de vitesses de coupe la plus faible lorsqu'une usure prédéfinie a été relevée lors de la surveillance.

En reprenant l'exemple de la figure 9, cela signifie que l'on choisirait d'abord dans le domaine D2 la vitesse de 110m/min comme vitesse de coupe, on surveille l'usure de l'outil, et si celle devient trop importante, ce que l'on peut constater par exemple par la forme des copeaux, on diminue pour se localiser dans le domaine D1 à une valeur de la vitesse de coupe de 40m/min.

Ainsi, on peut usiner avec une productivité très importante dans un premier temps et puis « finir » l'outil d'usinage en utilisant le domaine de fonctionnement des vitesses de coupes les plus basses.

On peut aussi surveiller l'usure de l'outil par exemple en mesurant l'évolution de la puissance totale d'un spectre de vibrations.

Par ailleurs, l'invention a pour objet une unité programmable comprenant des moyens de mémorisation et un programme d'ordinateur mémorisé dans ces moyens de mémorisation, le programme d'ordinateur comprenant des instructions pour réaliser les étapes d'un procédé 150 et/ou 152 tel que défini ci-dessus.

L'invention a encore pour objet un programme d'ordinateur comprenant des instructions pour réaliser les étapes d'un procédé 150 et/ou 152 tel que défini ci-dessus.

**Revendications**

1. Procédé de détermination d'au moins un point de fonctionnement d'une machine-outil pour une configuration donnée outil - matière à usiner dans la machine-outil, dans lequel :

   - on mesure (200) à l'intérieur d'une plage prédéfinie d'un paramètre dynamique de coupe des spectres de vibrations avec au moins un accéléromètre placé sur la machine-outil, de préférence au niveau de l'outil de coupe et en appliquant une transformée de Fourier à une mesure de vibrations en fonction du temps,
   - on identifie sur les spectres de vibrations des bandes significatives de fréquences par comparaison des spectres de vibrations pris à des valeurs de paramètre dynamique de coupe différentes, une structure émergeante du spectre apparaissant à différentes valeurs de paramètre dynamique de coupe comme une bande significative de fréquences,
   - on détermine (202) des valeurs de puissance des bandes significatives en fonction du paramètre dynamique de coupe,
   - on détermine une valeur résultante de puissance de bande significative de fréquences en fonction des valeurs de paramètre dynamique de coupe
   - on détermine (206) au moins un point de fonctionnement à partir des variations des valeurs de puissance en fonction du paramètre dynamique de coupe comme étant une valeur du paramètre dynamique de coupe qui est située dans une plage de variation limitée de la valeur résultante de puissance soit entre deux maxima de valeur résultante de puissance, soit entre la valeur la plus faible du paramètre dynamique de coupe et le premier maximum de la valeur résultante de puissance.

2. Procédé selon la revendication 1, **caractérisé en ce que** les valeurs de puissance des bandes significatives de fréquences correspondent à des amplitudes maximales des bandes significatives de fréquences ou à des valeurs d'aire des bandes significatives de fréquences.

3. Procédé selon la revendication 1 ou 2, **caractérisé en ce que** l'on obtient les spectres de vibrations à l'intérieur d'une plage prédéfinie du paramètre dynamique de coupe à intervalles réguliers.

4. Procédé selon l'une quelconque des revendications 1 à 3, **caractérisé en ce que** le paramètre dynamique de coupe est la vitesse de coupe ou la vitesse d'avance.

5. Procédé selon la revendication 4, **caractérisé en ce que** l'on fixe la vitesse d'avance à une valeur prédéfinie et **en**

**ce que** le paramètre dynamique de coupe est la vitesse de coupe.

6. Procédé selon la revendication 4, **caractérisé en ce que** l'on fixe la vitesse de coupe à une valeur prédéfinie et **en ce que** le paramètre dynamique de coupe est la vitesse d'avance.

7. Procédé selon la revendication 6, **caractérisé en ce que** la valeur prédéfinie de la vitesse de coupe est déterminée selon la revendication 5, en particulier pour une opération de perçage.

8. Procédé selon l'une quelconque des revendications 1 à 7, **caractérisé en ce que** l'on détermine le point de fonctionnement ayant la valeur du paramètre dynamique de coupe la plus élevée comme point de fonctionnement optimisé.

9. Procédé selon l'une quelconque des revendications 1 à 8, **caractérisé en ce que** l'on détermine plusieurs plages admissibles de fonctionnement.

10. Procédé de commande d'une machine outil dans lequel on détermine un point de fonctionnement selon un procédé (150) selon l'une quelconque des revendications 1 à 9 et l'on règle (152) la valeur du paramètre dynamique de coupe selon le point de fonctionnement déterminé.

11. Procédé de commande selon la revendication 10, **caractérisé en ce que** l'on détermine comme point de fonctionnement le point de fonctionnement optimisé selon l'une quelconque des revendications 1 à 9.

12. Procédé de commande selon la revendication 10 ou 11, **caractérisé en ce que** l'on détermine plusieurs domaines de fonctionnement selon la revendication 9 et **en ce que** on règle la valeur du paramètre dynamique de coupe selon un point de fonctionnement se situant dans le domaine des valeurs de paramètre de coupe de coupe plus élevées.

13. Procédé de commande selon l'une quelconque des revendications 10 à 12, **caractérisé en ce que**

   - on règle la vitesse de coupe selon un point de fonctionnement se situant dans le domaine de vitesses de coupe plus élevées,
   - on surveille l'usure de l'outil lors des opérations de coupe,
   - on diminue la vitesse de coupe selon un point de fonctionnement se situant dans le domaine de vitesses de coupe la plus faible lorsqu'une usure prédéfinie a été relevée lors de la surveillance.

14. Procédé selon l'une quelconque des revendications 1 à 13, **caractérisé en ce que** l'on surveille l'usure de l'outil en mesurant l'évolution de la puissance totale d'un spectre de vibrations.

15. Dispositif de détermination d'au moins un point de fonctionnement d'une machine-outil (1) pour une configuration donnée outil - matière à usiner dans la machine-outil, comprenant des moyens (14) de traitement adaptés pour :

   - mesurer (200) à l'intérieur d'une plage prédéfinie d'un paramètre dynamique de coupe des spectres de vibrations avec au moins un accéléromètre placé sur la machine-outil, de préférence au niveau de l'outil de coupe et en appliquant une transformée de Fourier à une mesure de vibrations en fonction du temps,
   - identifier sur les spectres de vibrations des bandes significatives de fréquences par comparaison des spectres de vibrations pris à des valeurs de paramètre dynamique de coupe différentes, une structure émergeante du spectre apparaissant à différentes valeurs de paramètre dynamique de coupe comme une bande significative de fréquences,
   - déterminer (202) des valeurs de puissance des bandes significatives en fonction du paramètre dynamique de coupe,
   - déterminer une valeur résultante de puissance de bande significative de fréquences en fonction des valeurs de paramètre dynamique de coupe
   - déterminer (206) au moins un point de fonctionnement à partir des variations des valeurs de puissance en fonction du paramètre dynamique de coupe comme étant une valeur du paramètre dynamique de coupe qui est située dans une plage de variation limitée de la valeur résultante de puissance soit entre deux maxima de valeur résultante de puissance, soit entre la valeur la plus faible du paramètre dynamique de coupe et le premier maximum de la valeur résultante de puissance.

**16.** Dispositif de détermination selon la revendication 15, **caractérisé en ce que** les moyens de traitement (14) sont adaptés pour mesurer les spectres de vibrations avec au moins un accéléromètre par exemple placé sur la machine-outil, de préférence au niveau de l'outil de coupe.

**17.** Module de commande (10) d'une machine outil, en particulier d'une machine-outil à commande numérique comprenant un dispositif (11) selon l'une quelconque des revendications 15 ou 16 et une sortie de commande de la vitesse de coupe selon le point de fonctionnement déterminé adapté à être branché sur une entrée correspondante d'une machine-outil.

**18.** Machine - outil (1) comprenant un module de commande selon la revendication 17.

**19.** Unité programmable comprenant des moyens de mémorisation et un programme d'ordinateur mémorisé dans ces moyens de mémorisation, le programme d'ordinateur comprenant des instructions pour réaliser les étapes d'un procédé selon l'une quelconque des revendications 1 à 14.

**20.** Programme d'ordinateur comprenant des instructions pour réaliser les étapes d'un procédé selon l'une quelconque des revendications 1 à 14.

**FIG. 1**

**FIG. 2**

**FIG. 3**

**FIG. 4**

**FIG. 5**

**FIG. 6**

FIG. 7

FIG. 8

**FIG. 9**

```
┌─────────────────┐  ⎫
│       200       │  │
└─────────────────┘  │
         │           │
         ▼           │
┌─────────────────┐  │
│       202       │  │
└─────────────────┘  │
         │           ⎬── 150
         ▼           │
┌─────────────────┐  │
│       204       │  │
└─────────────────┘  │
         │           │
         ▼           │
┌─────────────────┐  │
│       206       │  │
└─────────────────┘  ⎭
```

# FIG. 10

```
┌─────────────────┐
│       150       │
└─────────────────┘
         │
         ▼
┌─────────────────┐
│       152       │
└─────────────────┘
```

# FIG. 11

**EP 2 248 626 A1**

Europäisches Patentamt
European Patent Office
Office européen des brevets

**RAPPORT DE RECHERCHE EUROPEENNE**

Numéro de la demande

EP 10 16 1584

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 5 170 358 A (DELIO THOMAS S [US]) 8 décembre 1992 (1992-12-08) * colonne 10, ligne 15-63; revendications 1,5-7,13 * ----- | 1-20 | INV. B23Q11/00 B23Q17/12 |
| A | WO 99/15310 A (DESIGN & MANUFACTURING SOLUTIO [US]) 1 avril 1999 (1999-04-01) * pages 5-6 * ----- | 1-20 | |

| DOMAINES TECHNIQUES RECHERCHES (IPC) |
|---|
| B23Q G05B |

Le présent rapport a été établi pour toutes les revendications

| Lieu de la recherche | Date d'achèvement de la recherche | Examinateur |
|---|---|---|
| Munich | 10 août 2010 | Lasa Goñi, Andoni |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.........................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 10 16 1584

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

10-08-2010

| Document brevet cité au rapport de recherche | Date de publication | Membre(s) de la famille de brevet(s) | Date de publication |
|---|---|---|---|
| US 5170358 A | 08-12-1992 | AUCUN | |
| WO 9915310 A | 01-04-1999 | AT 216303 T | 15-05-2002 |
| | | AU 728618 B2 | 11-01-2001 |
| | | AU 9384198 A | 12-04-1999 |
| | | BR 9815093 A | 10-10-2000 |
| | | CA 2302176 A1 | 01-04-1999 |
| | | CN 1271305 A | 25-10-2000 |
| | | DE 69804982 D1 | 23-05-2002 |
| | | DE 69804982 T2 | 07-11-2002 |
| | | DE 1017535 T1 | 25-01-2001 |
| | | EP 1017535 A1 | 12-07-2000 |
| | | ES 2149150 T1 | 01-11-2000 |
| | | JP 2001517557 T | 09-10-2001 |
| | | MX PA00002818 A | 31-10-2002 |
| | | PT 1017535 E | 30-09-2002 |
| | | US 6085121 A | 04-07-2000 |

EPO FORM P0460

Pour tout renseignement concernant cette annexe : voir Journal Officiel de l'Office européen des brevets, No.12/82